# NOUVEAU FASCICULE DE BREVET EUROPEEN

(11) **EP 1 198 108 B2**
(45) Date de publication et mention de la décision concernant l'opposition: **25.05.2016**
(45) Mention de la délivrance du brevet: 06.03.2013
(21) Numéro de dépôt: 01402574.6
(22) Date de dépôt: 05.10.2001
(51) Int. Cl.: H04L 29/12, H04L 12/24, G05B 19/418, H04L 12/28, G05B 19/042

(54) **Méthode et dispositif de configuration d'un module d'automatisme sur un réseau TCP/IP**
Konfigurationsverfahren für ein Automatisierungsmodul in einem TCP/IP Netzwerk
Method of configuring an automation module on a TCP/IP network

(30) Priorité: 12.10.2000 FR 0013191
(43) Date de publication de la demande: 17.04.2002
(73) Titulaire: Schneider Automation, 06560 Valbonne (FR)
(72) Inventeur: Camerini, Jacques, 06130 Grasse (FR); Leconte, Marc, Winchester, MA 01890 (US); Dube, Dennis J. W., Pelham, HN 03076 (US)
(74) Mandataire: Dufresne, Thierry

(56) Documents cités:
- US-A- 6 049 826
- DROMS R: "RFC2131: Dynamic Host Configuration Protocol" INTERNET CITATION, [Online] mars 1997 (1997-03), XP002168114 Extrait de l'Internet: URL:http://www.faqs.org/rfcs/rfc2131.html> [extrait le 2001-05-23]
- XINHUA FENG: "Home Networking" PAPER, [Online] 14 novembre 1999 (1999-11-14), pages 1-15, XP002174547 Ohio, USA Extrait de l'Internet: URL:http://www.exp-math.uni-essen.de/~vinc k/plc/homenetworking.htm> [extrait le 2001-08-10]

## Description

La présente invention concerne une méthode permettant d'effectuer rapidement la configuration d'un module d'automatisme connecté à un réseau conforme au protocole TCP/IP, notamment suite au remplacement d'un module défectueux. Elle concerne également un ensemble d'automatisme comprenant au moins un équipement d'automatisme et capable de mettre en oeuvre une telle méthode. Cette invention peut s'appliquer à tout ensemble d'automatisme appartenant au domaine des automatismes industriels, des automatismes du bâtiment ou du contrôle/commande des réseaux électriques de distribution.

Sous le terme "module d'automatisme", on désignera ci-après tout appareil muni d'une unité de traitement et d'une interface de communication à un réseau TCP/IP, et utilisé dans un ensemble d'automatisme, comme par exemple un module d'entrées/sorties, un variateur de vitesse, un dispositif de régulation, un terminal de dialogue homme-machine, un automate programmable ou un module métier d'un automate programmable ou d'une commande numérique. Sous le terme "équipement d'automatisme", on désignera ci-après un automate programmable, une commande numérique, une station de contrôle/commande à base d'ordinateur, ou tout équipement muni d'une unité de traitement et d'une interface de communication à un réseau TCP/IP, pouvant contenir et dérouler un programme application dans un ensemble d'automatisme.

La simplification de l'opération de remplacement d'un module d'automatisme est déterminante dans un ensemble d'automatisme. En effet, il est essentiel que cette opération puisse se faire de façon rapide et simple par du personnel de maintenance pas forcément formé aux technologies d'un réseau informatique, afin de perturber le moins possible le process géré par cet ensemble d'automatisme. Les bus de terrain habituellement rencontrés dans le domaine des automatismes offrent souvent de telles possibilités.

Cependant, l'utilisation d'un réseau conforme au protocole TCP/IP, appelé par la suite réseau TCP/IP, est désormais de plus en plus fréquente dans le domaine des automatismes. Ce type de réseau, qui peut inclure plusieurs sous réseaux TCP/IP, est fréquemment associé à une couche liaison Ethernet. Lors du remplacement d'un module d'automatisme connecté à un tel réseau TCP/IP, il est d'ordinaire nécessaire d'affecter au nouveau module d'automatisme une adresse MAC (Medium Access Control) unique ainsi qu'une adresse IP (Internet Protocol). De plus, certains modules d'automatisme possèdent des paramètres ou des données de configuration de l'application qu'il est indispensable de recharger dans le nouveau module pourretrouver un fonctionnement satisfaisant. Enfin, du fait que toutes les adresses MAC sont uniques, un changement de module entraîne, dans le cas de l'utilisation d'un protocole de type BOOTP (Boot Protocol) permettant de récupérer une adresse IP à partir d'une adresse MAC, une mise à jour des données de configuration du serveur BOOTP.

Ces opérations s'avèrent donc lourdes pour le personnel de maintenance et peuvent être des sources d'erreurs pénalisantes pour le process. Il serait alors souhaitable de pouvoir proposer des services qui permettraient de simplifier les opérations de maintenance pour des modules d'automatisme connectés à un tel réseau TCP/IP.

Le document "RFC2131 : Dynamic Host Configuration Protocol", Droms R, mars 1997, XP002168114, décrit le protocole de configuration DH-CP ainsi qu'une méthode de configuration sur un réseau TCP/IP. Le document "Home Networking" pages 1-15, XinHua Feng, 14 novembre 1999, XP002174547, divulgue la possibilité de configurer des équipements connectés à un réseau de type domotique à l'aide du protocole DHCP.

Le but de l'invention est donc de proposer une méthode afin de s'affranchir de la dépendance avec l'adressage MAC pour un nouveau module d'automatisme connecté à un réseau TCP/IP. L'invention doit aussi permettre d'assigner automatiquement à ce nouveau module une adresse IP etde recharger automatiquement dans le module un fichier de données pouvant contenir aussi bien des paramètres que des programmes. Afin de pouvoir s'implanter facilement et rapidement dans un module et dans un équipement d'automatisme, la solution proposée devra s'appuyer sur des protocoles standards du monde de l'Internet, comme le protocole DHCP (Dynamic Host configured Protocol) décrit dans le document RFC 2131 et les protocoles FTP (File Transfer Protocol) ou TFTP (Trivial File Transfer Protocol) décrits dans les documents RFC 959 et RFC 1350. Le protocole DHCP permet d'allouer une adresse IP et de transmettre des informations de configuration tel que l'adresse d'un serveur de données. Les protocoles FTP et TFTP permettent d'effectuer des transferts de fichiers au sein d'un réseau TCP/IP.

Pour cela, l'invention décrit une méthode de configuration d'un module d'automatisme sur un réseau TCP/IP auquel est connecté également au moins un équipement d'automatisme. La méthode de configuration comporte successivement les étapes suivantes : une étape préliminaire d'attribution d'un nom d'application unique sur le réseau TCP/IP pour le module d'automatisme ; une étape d'adressage dans laquelle le module d'automatisme émet vers un serveur DHCP une requête de demande d'adresse sur le réseau TCP/IP contenant le nom d'application du module d'automatisme et conforme au protocole DHCP ; une étape de configuration dans laquelle le module d'automatisme émet vers un serveur FTP/TFTP une requête de lecture de configuration, conforme au protocole FTP ou TFTP, sur le réseau TCP/IP. Durant l'étape d'adressage, le module d'automatisme reçoit du serveur DHCP une réponse à la requête de demande d'adresse, contenant un adressage IP ainsi qu'une localisation d'un fichier de données propre au module d'automatisme, permettant alors le passage à l'étape de configuration. Durant l'étape de configuration, le module d'automatisme reçoit du serveur FTP/TFTP une réponse à la requête de lecture de configuration, contenant le fichier de données du module d'automatisme, celui-ci pouvant ensuite passer dans un état opérationnel. L'invention est caractérisée en ce que, durant l'étape de configuration, lorsqu'un module d'automatisme est à l'état opérationnel, il émet à son initiative une requête d'écriture de configuration vers le serveur FTP/TFTP pour mettre à jour ou sauvegarder toutou partie de son fichier de données et une requête de lecture de configuration vers le serveur FTP/TFTP pour vérifier ou recharger tout ou partie de son fichier de données.

L'invention décrit également un ensemble d'automatisme selon la revendication 5. Un premier équipement d'automatisme connecté au réseau TCP/IP et muni d'une unité de traitement reliée à des moyens de stockage et à une interface de communication réseau, peut exécuter dans son unité de traitement un serveur DHCP et peut mémoriser dans ses moyens de stockage une table de configuration associant le nom d'application d'au moins un client DHCP à un adressage IP et à une localisation d'un fichier de données. De plus, un serveur FTP/TFTP peut être exécuté dans l'unité de traitement du premier équipement d'automatisme, dans une unité de traitement d'un second équipement d'automatisme connecté au réseau TCP/IP ou dans un serveur de fichiers dédié à cet usage.

D'autres caractéristiques et avantages vont apparaître dans la description détaillée qui suit en se référant à un mode de réalisation donné à titre d'exemple et représenté par les dessins annexés sur lesquels :
- la figure 1 représente une architecture dans laquelle un module d'automatisme est connecté par un réseau TCP/IP à un équipement d'automatisme conformément à l'invention,
- la figure 2 présente une variante de la figure 1 avec deux équipements d'automatisme,
- la figure 3 détaille une table de configuration contenue dans un serveur DHCP,
- la figure 4 montre une représentation des étapes de la méthode de configuration d'un module d'automatisme.

Dans le reste du document, on assimilera le terme "adressage IP" à l'ensemble constitué d'une adresse IP, d'un masque de sous-réseau et d'une adresse de passerelle permettant de définir complètement l'adressage du module d'automatisme sur un réseau TCP/IP. De même le terme "localisation" du fichier de données d'un module d'automatisme regroupe l'ensemble constitué de l'adressage IP du serveur FTP/TFTP contenant le fichier de données considéré, le chemin d'accès au fichier de données à l'intérieur du serveur FTP/TFTP et éventuellement la (ou les) clé(s) de connexion au serveur FTP/TFTP pour pouvoir accéder à ce fichier de données (par exemple nom d'utilisateur et mot de passe).

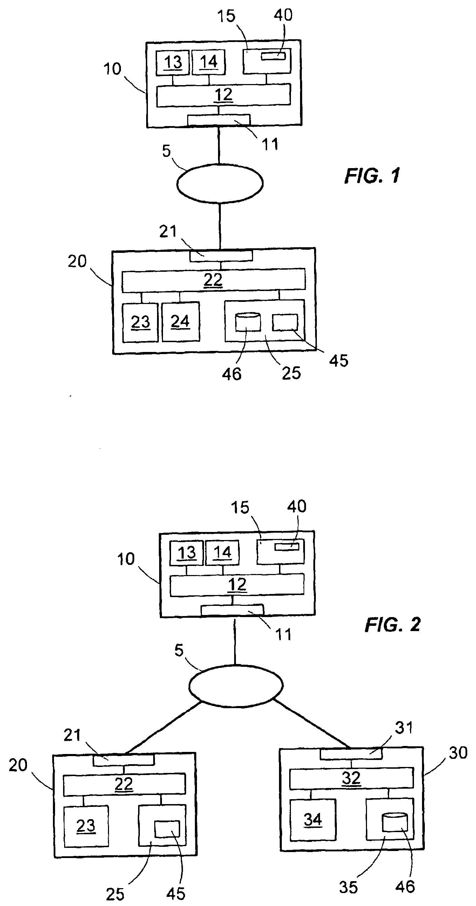

L'ensemble d'automatisme représenté dans la figure 1 comporte un module d'automatisme 10 comprenant une unité de traitement 12 reliée à une interface réseau 11 et à des moyens de stockage d'informations 15. Le module 10 est connecté à un réseau TCP/IP 5 par l'intermédiaire de l'interface réseau 11. Il est capable d'exécuter dans son unité de traitement 12 un client DHCP 13 et un agent FTP ou TFTP appelé agent FTP/TFTP 14. Le choix entre le protocole FTP ou le protocole TFTP n'a pas d'incidence pour l'utilisateur final car les fonctionnalités utilisées dans l'invention sont essentiellement les requêtes de lecture ("READ/GET") et d'écriture ("WRITE/PUT") de fichiers. L'agent TFTP est seulement plus compact que l'agent FTP et pourrait donc être plus facilement implantable dans la mémoire d'un module d'automatisme de petite taille. Le module d'automatisme 10 peut mémoriser dans ses moyens de stockage 15 un nom d'application 40 propre au module d'automatisme 10.

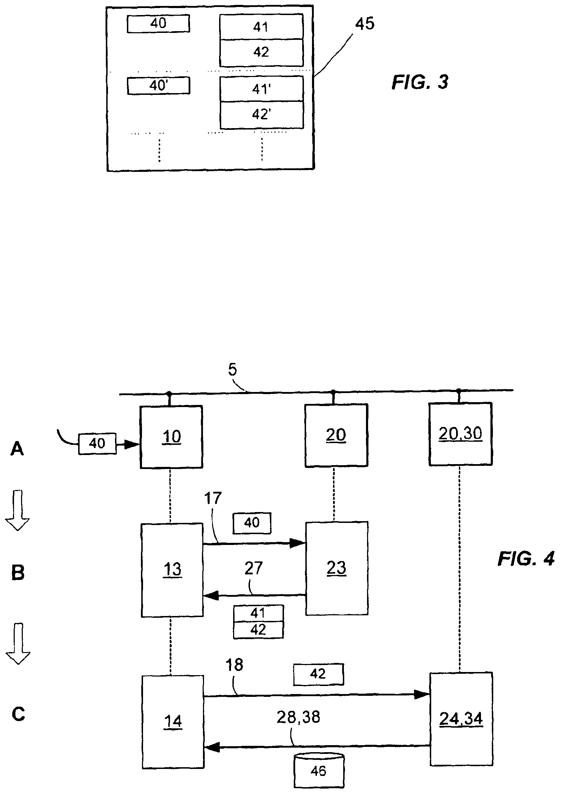

L'ensemble d'automatisme comporte aussi au moins un équipement d'automatisme 20 comprenant une unité de traitement 22 reliée à une interface réseau 21 et à des moyens de stockage d'informations 25. L'équipement 20 est connecté au réseau TCP/IP 5 par l'intermédiaire de son interface réseau 21. Il est capable d'exécuter dans son unité de traitement 22 un serveur DHCP 23 et un serveur FTP ou TFTP appelés serveur FTP/TFTP 24. L'équipement d'automatisme 20 mémorise dans ses moyens de stockage 25 un fichier de données 46 d'au moins un agent FTP/TFTP 14 appartenant à un module d'automatisme 10. L'équipement d'automatisme 20 mémorise aussi dans ses moyens de stockage 25 une table de configuration 45 associant le nom d'application 40 d'au moins un client DHCP 13 d'un module d'automatisme 10 avec un adressage IP 41 et avec une localisation 42 d'un fichier de données propres au module d'automatisme 10. Dans l'exemple de la figure 3, une table de configuration 45 comprend en entrée deux noms d'application 40,40' auxquels correspondent en sortie deux adressages IP 41,41' et deux localisations 42,42'.

Dans la variante présentée en figure 2, les serveurs DHCP et serveurs FTP/TFTP ont été séparés de sorte que l'ensemble d'automatisme comporte un premier et un second équipements d'automatisme respectivement 20,30 comprenant chacun une unité de traitement respectivement 22,32 reliée à une interface réseau 21,31 et à des moyens de stockage d'informations 25,35. Le premier équipement d'automatisme 20 est capable d'exécuter dans son unité de traitement 22 un serveur DHCP 23 et le second équipement d'automatisme 30 est capable d'exécuter dans son unité de traitement 32 un serveur FTP/TFTP 34. Les moyens de stockage 25 du premier équipement d'automatisme 20 mémorisent une table de configuration 41 et les moyens de stockage 35 du second équipement d'automatisme 30 mémorise un fichier de données 46.

En référence à la figure 4, la méthode de configuration proposée comporte successivement les étapes suivantes :
- Une étape préliminaire A d'attribution d'un nom d'application. Cette étape a pour but d'affecter au module d'automatisme 10 un nom d'application 40 qui devra être unique dans le ou les sous réseaux TCP/IP accessibles 5. Ce nom d'application 40 est composé d'une chaîne de caractères ASCII. Indifféremment, l'étape d'attribution A peut se faire avant la connexion du module 10 au réseau TCP/IP 5. Suivant les capacités du module d'automatisme 10, on peut envisager d'utiliser de nombreux moyens d'affectation pour assigner à un module 10 son nom d'application 40 : affectation locale à l'aide d'une interface Homme-Machine, affectation par communication locale (liaison série,...) ou distante (page Web), affectation par des moyens mécaniques (roues codeuses, commutateurs,...). Une combinaison de ces différents moyens d'affectation est aussi possible. Par ailleurs, dans certains modules, le nom d'application 40 peut également être une juxtaposition entre des caractères prédéfinis par le fabricant pour caractériser un type ou une famille de modules, en combinaison avec un numéro de personnalisation affecté par un des moyens d'affectation cités. Une fois déterminé, l'unité de traitement 12 du module d'automatisme 10 est capable de mémoriser le nom d'application 40 dans les moyens de stockage 15. L'existence d'un nom d'application 40 mémorisé dans le module d'automatisme 10 conditionne le passage à l'étape suivante. Lors du remplacement d'un module d'automatisme défectueux par un nouveau module, on attribuera à ce nouveau module le même nom d'application que celui du module défectueux afin qu'il puisse récupérer le fichier de données du module défectueux.
- Une étape d'adressage B durant laquelle le module d'automatisme 10 doit être connecté sur le réseau TCP/IP 5. Le client DHCP 13 du module d'automatisme 10 peut alors émettre vers un serveur DHCP 23, implantédans un équipement d'automatisme 20, une requête de demande d'adresse 17 conforme au protocole DHCP. Cette requête DHCP de demande d'adresse 17 contient comme paramètre, dans un champ DHCP optionnel (client identifier code 61), le nom d'application 40 qui était mémorisé dans les moyens de stockage 15 du module d'automatisme 10.
   A réception de la requête DHCP de demande d'adresse 17, le serveur DHCP 23 recherche, dans la table de configuration 45 mémorisée dans les moyens de stockage 25 de l'équipement d'automatisme 20, un adressage IP 41 et une localisation du fichier de données 42 correspondant au nom d'application 40 reçu.
   Si le nom d'application 40 est présent dans la table de configuration 41, alors le serveur DHCP 23 renvoie une réponse 27 à la requête de demande d'adresse 17, conforme au protocole DHCP. Cette réponse DHCP 27 contient comme paramètre l'adressage IP 41 et la localisation du fichier de données 42 correspondant avec le nom d'application 40 du module 10. Si le nom d'application 40 n'est présent pas dans la table de configuration 45, alors le serveur DHCP 23 renvoie une réponse d'erreur selon une procédure déterminée non détaillée dans le présent document. Une fois la réponse 27 reçue, le module d'automatisme 10 peut passer à l'étape de configuration C suivante.
- Une étape de configuration C dans laquelle le client FTP/TFTP 14 du module d'automatisme 10 peut émettre vers un serveur FTP/TFTP 24,34, implanté dans un équipement d'automatisme respectivement 20,30, une requête de lecture de configuration 18 conforme au protocole FTP/TFTP. Cette requête FTP/TFTP de lecture de configuration 18 contient comme paramètre la localisation 42 du fichier de données reçue par le module d'automatisme 10 avec la réponse DHCP 27. Grâce à cette localisation 42, le serveur FTP/TFTP 24,34 est capable d'aller chercher le fichier de données 46 mémorisé dans les moyens de stockage 25,35 et de renvoyer une réponse FTP/TFTP 28,38 à la requête de lecture de configuration 18 contenant le fichier de données 46 propre au module d'automatisme 10. Si le serveur FTP/TFTP ne peut accéder à un fichier de données correct correspondant à la localisation 42 reçue, il renvoie un message d'erreur selon une procédure déterminée non détaillée dans le présentdocument. Lors de la réception du fichier de données 46 par le client FTP/TFTP 14, l'unité de traitement 12 du module 10 peut effectuer certaines vérifications (validité des données du fichier, compatibilité avec le module présent, etc...) avant de charger ce fichier de données dans les moyens de stockage 15 du module 10. U ne fois le fichier de données chargé, la méthode de configuration est alors achevée et le module d'automatisme 10 passe dans un état opérationnel où il est capable de fonctionner normalement.

La méthode de configuration prévoit également que, lorsqu'un module d'automatisme est à l'état opérationnel, il est capable de faire, de sa propre initiative sur événement et/ou périodiquement, des requêtes FTP/TFTP de lecture ("READ/GET") de configuration 18 pour vérifier ou recharger tout ou partie de son fichier de données 46 mémorisé dans les moyens de stockage d'un serveur FTP/TFTP 24,34. De même, lorsqu'un module d'automatisme est à l'état opérationnel, il est capable de faire, de sa propre initiative sur événement et/ou périodiquement, des requêtes FTP/TFTP d'écriture ("WRI-TE/PUT") de configuration pour mettre à jour ou sauvegarder tout ou partie de son fichier de données 46 mémorisé dans les moyens de stockage d'un serveur FTP/ TFTP24,34. Ainsi, un remplacement d'un moduled'automatisme peut se faire dans de bonnes conditions puisque le fichier de données 46 associé à un module d'automatisme et mémorisé dans le serveur FTP/TFTP peut être vérifié et mis à jour régulièrement à l'initiative du module. Le rechargement du fichier 46 dans un éventuel nouveau module d'automatisme remplaçant pourra donc se faire avec une version toujours à jour.

Tout nom d'application 40de module d'automatisme 10 doit être au préalable introduit par des moyens appropriés dans la table de configuration 45 d'un serveur DHCP 23 en y associant un adressage IP 41 du module d'automatisme. Une fois la table de configuration mise à jour, le remplacement d'un module 10 par un autre ayant le même nom d'application 40 est réalisable selon la méthode décrite dans le présent document. Lors de l'introduction d'un nouveau nom d'application 40 dans la table de configuration 45, un fichier de données correspondant 46 vide est également généré dans le serveur FTP/TFTP 24. De même, si un nom d'application 40 est retiré de la table de configuration 45, le fichier de données correspondant 46 sera supprimé dans le serveur FTP/TFTP 24. De façon préférée, le fichier de données 46 est nommé en y associant le nom d'application 40 correspondant : par exemple le fichier de données 46 peut s'appeler *"nom d'application.prm*". Lors de l'introduction d'un nouveau nom d'application 40, la localisation 42 du fichier de données 46 dans le serveur FTP/ TFTP 24 doit aussi être créée dans la table de configuration 45.

Le contenu du fichier de données 46 dépend du type de module 10 et de son application dans le process. Néanmoins, il est préférable que le fichier de données 46 contienne au minimum les données nécessaires pour que le remplacement d'un module d'automatisme défectueux par un autre puisse se faire de façon transparente vis à vis d'un utilisateur. Le fichier de données 46 peut indifféremment contenir :
- des paramètres de communication (nom d'utilisateur HTTP, mots de passe, liste d'adresses IP autorisées,...),
- des paramètres d'identification du module (type, série, version) permettant de vérifier que le nouveau module d'automatisme 10 introduit en remplacement d'un ancien est compatible avec celui-ci,
- des paramètres applicatifs contenant des valeurs courantes de variables propres au process géré par le module d'automatisme 10 (consignes, mesures,...),
- des données de configuration ou du programme applicatif chargé et exécuté dans le module d'automatisme 10.

Il est bien entendu que l'on peut, sans sortir du cadre de l'invention, defini par les revendications, imaginer d'autres variantes et perfectionnements de détail.

## Revendications

1. Méthode de configuration d'un module d'automatisme (10) sur un réseau TCP/IP (5) auquel est connecté également au moins un équipement d'automatisme (20), la méthode de configuration comportant successivement les étapes suivantes :
• Une étape préliminaire d'attribution (A) d'un nom d'application (40) unique sur le réseau TCP/IP (5) pour le module d'automatisme (10),
• Une étape d'adressage (8) dans laquelle le module d'automatisme (10) émet vers un serveur DHCP (23) une requête de demande d'adresse (17) sur le réseau TCP/IP (5) contenant le nom d'application (40) du module d'automatisme (10) et conforme au protocole DHCP, le module d'automatisme (10) recevant du serveur DHCP (23) une réponse (27) à la requête de demande d'adresse (17) qui contient un adressage IP (41) ainsi qu'une localisation (42) d'un fichier de données (46) propre au module d'automatisme (10), permettant alors le passage à l'étape de configuration (C),
• Une étape de configuration (C) dans laquelle le module d'automatisme (10) émet vers un serveur FTP/TFTP (24,34) une requête de lecture de configuration (18) sur le réseau TCP/IP (5) utilisant la localisation (42) du fichier de données du module d'automatisme (10), conforme au protocole FTP ou TFTP, le module d'automatisme (10) recevant du serveur FTP/TFTP (24,34) une réponse (38) à la requête de lecture de configuration (18), contenant le fichier de données (46) du module d'automatisme (10), celui-ci pouvant ensuite passer dans un état opérationnel,
**caractérisé en ce que** durant l'étape de configuration (C), lorsqu'un module d'automatisme (10) est à l'état opérationnel, il émet à son initiative :
- une requête d'écriture de configuration vers le serveur FTP/TFTP(24,34) pour mettre à jour ou sauvegarder tout ou partie de son fichier de données (46) et
- une requête de lecture de configuration vers le serveur FTP/TFTP (24,34) pour vérifier ou recharger tout ou partie de son fichier de données (46).

2. Méthode de configuration selon la revendication 1, **caractérisé par le fait que** le serveur DHCP (23) est implanté dans un équipement d'automatisme (20) connecté au réseau TCP/IP (5).

3. Méthode de configuration selon la revendication 1 ou 2, **caractérisé par le fait que** le serveur FTP/ TFTP (24,34) est implanté dans un équipement d'automatisme (20,30) connecté au réseau TCP/IP (5).

4. Méthode de configuration selon la revendication 1, **caractérisé par le fait que le** fichier de données (46) d'un module d'automatisme est identifié en utilisant le nom d'application (40) du module d'automatisme (10).

5. Ensemble d'automatisme comprenant au moins un module d'automatisme (10) qui est connecté à un réseau TCP/IP (5) et qui est muni d'une unité de traitement (12) reliée à des moyens de stockage (15) et à une interface de communication réseau (11), le module d'automatisme (10) étant capable de mémoriser dans ses moyens de stockage (15) un nom d'application (40) propre au module d'automatisme (10) et pouvant exécuter dans son unité de traitement (12) un client DHCP (13) et un agent FTP/TFTP (14), **caractérisé en ce que** le module d'automatisme est adapté pour mettre en oeuvre la méthode de configuration selon l'une des revendications précédentes.

6. Ensemble d'automatisme selon la revendication 5 comprenant un premier H 5 équipement d'automatisme (20) qui est connecté au réseau TCP/IP (5) et qui est muni d'une unité de traitement (22) reliée à des moyens de stockage (25) et à une interface de communication réseau (21), **caractérisé par le fait que** le premier équipement d'automatisme (20) peut exécuter dans son unité de traitement (22) un serveur DHCP (23) et peut mémoriserdans ses moyens de stockage (25) une table de configuration (45) associant le nom d'application (40) d'au moins un client DHCP (13) à un adressage IP (41) et à une localisation (42) d'un fichier de données.

7. Ensemble d'automatisme selon la revendication 6 comprenant un second équipement d'automatisme (30) qui est connecté au réseau TCP/IP (5) et qui est muni d'une unité de traitement (32) reliée à des moyens de stockage (35) et à une interface de communication réseau (31), **caractérisé par le fait que** le second équipement d'automatisme (30) peut exécuter dans son unité de traitement (32) un serveur FTP/TFTP (34) et peut mémoriser dans ses moyens de stockage (35) un fichier de données (46) correspondant à au moins un agent FTP/TFTP (14).

8. Ensemble d'automatisme selon la revendication 6, **caractérisé par le fait que** le premier équipement d'automatisme (20) peut exécuter dans son unité de traitement (22) un serveur FTP/TFTP (24) et peut mémoriser dans ses moyens de stockage (25) un fichier de données (46) correspondant à au moins un agent FTP/TFTP (14).

## Patentansprüche

1. Verfahren zur Konfiguration eines Automatisierungsmoduls (10) auf einem TCP/IP-Netz (5), mit dem ebenfalls mindestens eine Automatisierungsausrüstung (20) verbunden ist, wobei das Konfigurationsverfahren nacheinander die folgenden Schritte aufweist:
• einen vorhergehenden Schritt der Zuteilung (A) eines einzigen Anwendungsnamens (40) auf dem TCP/IP-Netz (5) für das Automatisierungsmodul (10),
• einen Schritt der Adressierung (B), bei dem das Automatisierungsmodul (10) an einen DHCP-Server (23) eine Adressenanfrage-Anforderung (17) auf dem TCP/IP-Netz (5) sendet, die den Anwendungsnamen (40) des Automatisierungsmoduls (10) enthält und dem DHCP-Protokoll entspricht, wobei das Automatisierungsmodul (10) vom DHCP-Server (23) eine Antwort (27) auf die Adressenanfrage-Anforderung (17) empfängt, die eine IP-Adressierung (41) sowie eine Lokalisierung (42) einer Datei (46) enthält, die dem Automatisierungsmodul (10) eigen ist, dann den Übergang zum Konfigurationsschritt (C) erlaubt,
• einen Konfigurationsschritt (C), in dem das Automatisierungsmodul (10) an einen FTP/TFTP-Server (24, 34) eine Konfigurations-Leseanforderung (18) auf dem TCP/IP-Netz (5) sendet, die die Lokalisierung (42) der Datei des Automatisierungsmoduls (10) gemäß dem FTP-oder TFTP-Protokoll verwendet, wobei das Automatisierungsmodul (10) vom FTP/TFTP-Server (24, 34) eine Antwort (38) auf die Konfigurations-Leseanforderung (18) empfängt, die die Datei (46) des Automatisierungsmoduls (10) enthält, wobei dieses anschließend in einen betriebsbereiten Zustand übergehen kann,
**dadurch gekennzeichnet, dass** während des Konfigurationsschritts (C) ein Automatisierungsmodul (10), wenn es im betriebsbereiten Zustand ist, auf seine Initiative sendt:
- eine Konfigurations-Schreibanforderung an den FTP/TFTP-Server (24, 34), um die ganze oder einen Teil seiner Datei (46) zu aktualisieren oder zu sichern, und
- eine Konfigurations-Leseanforderung an den FTP/TFTP-Server (24, 34), um die ganze oder einen Teil seiner Datei (46) zu überprüfen oder neu zu laden.

2. Konfigurationsverfahren nach Anspruch 1, **dadurch gekennzeichnet, dass** der DHCP-Server (23) in eine Automatisierungsausrüstung (20) eingesetzt wird, die mit dem TCP/IP-Netz (5) verbunden ist.

3. Konfigurationsverfahren nach Anspruch 1 oder 2, **dadurch gekennzeichnet, dass** der FTP/TFTP-Server (24, 34) in eine Automatisierungsausrüstung (20, 30) eingesetzt wird, die mit dem TCP/IP-Netz (5) verbunden ist.

4. Konfigurationsverfahren nach Anspruch 1, **dadurch gekennzeichnet, dass** die Datei (46) eines Automatisierungsmoduls unter Verwendung des Anwendungsnamens (40) des Automatisierungsmoduls (10) bezeichnet wird.

5. Automatisierungseinheit, die mindestens ein Automatisierungsmodul (10) enthält, das mit einem TCP/IP-Netz (5) verbunden und mit einer Verarbeitungseinheit (12) versehen ist, die mit Speichereinrichtungen (15) und mit einer Netzkommunikationsschnittstelle (11) verbunden ist, wobei das Automatisierungsmodul (10) in seinen Speichereinrichtungen (15) einen Anwendungsnamen (40) speichern kann, der dem Automatisierungsmodul (10) eigen ist, und in seiner Verarbeitungseinheit (12) einen DHCP-Client (13) und einen FTP/TFTP-Agent (14) ausführen kann, **dadurch gekennzeichnet, dass** das Automatisierungsmodul geeignet ist, um das Konfigurationsverfahren nach einem der vorhergehenden Ansprüche durchzuführen.

6. Automatisierungseinheit nach Anspruch 5, die eine erste Automatisierungsausrüstung (20) enthält, die mit dem TCP/IP-Netz (5) verbunden und mit einer Verarbeitungseinheit (22) versehen ist, die mit Speichereinrichtungen (25) und mit einer Netzkommunikationsschnittstelle (21) verbunden ist, **dadurch gekennzeichnet, dass** die erste Automatisierungsausrüstung (20) in ihrer Verarbeitungseinheit (22) einen DHCP-Server (23) ausführen und in ihren Speichereinrichtungen (25) eine Konfigurationstabelle (45) speichern kann, die den Anwendungsnamen (40) mindestens eines DHCP-Clients (13) einer IP-Adressierung (41) und einer Lokalisierung (42) einer Datei zuordnet.

7. Automatisierungseinheit nach Anspruch 6, die eine zweite Automatisierungsausrüstung (30) enthält, die mit dem TCP/IP-Netz (5) verbunden und mit einer Verarbeitungseinheit (32) versehen ist, die mit Speichereinrichtungen (35) und mit einer Netzkommunikationsschnittstelle (31) verbunden ist, **dadurch gekennzeichnet, dass** die zweite Automatisierungsausrüstung (30) in ihrer Verarbeitungseinheit (32) einen FTP/TFTP-Server (34) ausführen und in ihren Speichereinrichtungen (35) eine Datei (46) speichern kann, die mindestens einem FTP/TFTP-Agent (14) entspricht.

8. Automatisierungseinheit nach Anspruch 6, **dadurch gekennzeichnet, dass** die erste Automatisierungsausrüstung (20) in ihrer Verarbeitungseinheit (22) einen FTP/TFTP-Server (24) ausführen und in ihren Speichereinrichtungen (25) eine Datei (46) speichern kann, die mindestens einem FTP/TFTP-Agent (14) entspricht.

## Claims

1. Configuration method for an automation module (10) on a TCP/IP network (5) to which at least one automation equipment (20) is also connected, the configuration method comprising the following steps in sequence:
• A preliminary step (A) in which an application name (40) is assigned, this application name being unique on the TCP/IP network (5) for the automation module (10),
• An addressing step (B) in which the automation module (10) sends a request address query (17) on the TCP/IP network (5), containing the application name (40) of the automation module (10) and conform with the DHCP protocol, the automation module (10) receiving from the DHCP server (23) a response (27) to the request address query (17) which contains an IP addressing (41) and a location (42) of a data file (46) specific to the automation module (10), making it possible to go on to configuration step (C),
• A configuration step (C) in which the automation module (10) sends to an FTP/TFTP server (24, 34) a read configuration query (18) on the TCP/IP network (5), conform with the FTP or TFTP protocol, using the location (42) of the data file for the automation module (10), the automation module (10) receiving from the FTP/TFTP server (24, 34) a response (38) to the read configuration query (18), containing the data file (46) for the automation module (10), such that the automation module can then change to an operational state,
**characterized by** the fact that during the configuration step (C), when an automation module (10) is in the operational state, it sends on its own initiative:
- a write configuration query to the FTP/TFTP server (24, 34) to update or save all or some of its data file (46) and
- a read configuration query to the FTP/TFTP server (24, 34) to check or reload all or some of its data file (46).

2. Configuration method according to claim 1, **characterized by** the fact that the DHCP server (23) is installed in automation equipment (20) connected to the TCP/IP network (5).

3. Configuration method according to claim 1 or 2, **characterized by** the fact that the FTP/TFTP server (24, 34) is installed in automation equipment (20, 30) connected to the TCP/IP network (5).

4. Configuration method according to claim 1, **characterized by** the fact that the data file (46) of an automation module is identified using the application name (40) of the automation module (10).

5. Automation assembly comprising at least one automation module (10) connected to a TCP/IP network (5) and equipped with a processing unit (12) which is connected to storage means (15) and to a network communication interface (11), the automation module (10) being capable of memorizing an application name (40) specific to the automation module (10) in its storage means (15), and being capable of executing a DHCP client (13) and an FTP/TFTP agent (14) in its processing unit (12), **characterized in that** the automation module is adapted to implement a configuration method according to any one of the previous claims.

6. Automation assembly according to claim 5, comprising first automation equipment (20) that is connected to the TCP/IP network (5) and that is equipped with a processing unit (22) connected to storage means (25) and to a network communication interface (21) **characterized by** the fact that the first automation equipment (20) can execute a DHCP server (22) in its processing unit (22) and can memorize a configuration table (45) in its storage means (25), associating the application name (40) of at least one DHCP client (13) with an IP addressing (41) and a location (42) of a data file.

7. Automation assembly according to claim 6 comprising a second automation equipment (30) that is connected to the TCP/IP network (5) and that is provided with a processing unit (32) connected to storage means (35) and to a network communication interface (31), **characterized by** the fact that the second automation equipment (30) can execute an FTP/TFTP server (34) in its processing unit (32) and can memorize a data file (46) corresponding to at least one FTP/TFTP agent (14) in its storage means (35).

8. Automation assembly according to claim 6, **characterized by** the fact that the first automation equipment (20) can execute an FTP/TFTP server (24) in its processing unit (22) and can memorize a data file (46) corresponding to at least one FTP/TFTP agent (14) in its storage means (25).
